**Europäisches Patentamt**

**European Patent Office**

**Office européen des brevets**

(11) Veröffentlichungsnummer: **0 291 646**

**A1**

# EUROPÄISCHE PATENTANMELDUNG

(21) Anmeldenummer: **88103252.8**

(22) Anmeldetag: **03.03.88**

(51) Int. Cl.⁴: **C04B 35/82 , C04B 30/02 , C04B 28/02 , //(C04B30/02, 14:46),(C04B28/02,14:46)**

(30) Priorität: **19.05.87 DE 3716729**

(43) Veröffentlichungstag der Anmeldung: **23.11.88 Patentblatt 88/47**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Rausch, Miroslav**
**Bärstadterstrasse 16**
**D-6208 Bad Schwalbach 3(DE)**
Erfinder: **Wirth, Ludwig M.**
**Carl-von-Ossietzkystrasse 33**
**D-6200 Wiesbaden(DE)**
Erfinder: **Elstner, Ingo, Dr.**
**Augustastrasse 2b**
**D-6200 Wiesbaden(DE)**
Erfinder: **Nebe, Ulrich, Dr.**
**Friedberger Strasse 3**
**D-6303 Hungen(DE)**

(74) Vertreter: **Brückner, Raimund**
**c/o Didier-Werke AG Hauptverw./Patentabt.**
**Postfach 2025 Lessingstrasse 16-18**
**D-6200 Wiesbaden1(DE)**

(54) Verfahren zur Herstellung von Mineralfasern enthaltenden, kohlenstoffgebundenen Formteilen.

(57) Die Erfindung betrifft ein Verfahren zur Herstellung von feuerfeste oder feuerbeständige Mineralfasern enthaltenden Formteilen, wobei die Mineralfasern in eine kohlenstoffhaltige Matrix eingebettet werden, sowie nach diesem Verfahren hergestellte, Mineralfasern enthaltende, kohlenstoffgebundene Formteile.

Gemäß diesem Verfahren wird auf in wässriger Aufschlämmung vorliegende Mineralfasern feinteiliges Pech, Teer oder Resol- oder Novolakharze aus der wässrigen Aufschlämmung geflockt, dann aus der Aufschlämmung das Formteil hergestellt, dann das grüne Formteil getrocknet und bei Temperaturen von 350°C bis 1300°C pyrolisiert.

Die nach diesem Verfahren hergestellten Formteile weisen den Vorteil auf, daß ihre Rohdichte in weiten Grenzen eingestellt werden kann, wobei insbesondere auch sehr niedrige Rohdichten erreicht werden können.

## Verfahren zur Herstellung von Mineralfasern enthaltenden, kohlenstoffgebundenen Formteilen

Die Erfindung betrifft ein Verfahren zur Herstellung von feuerfeste oder feuerbeständige Mineralfasern enthaltenden Formteilen, wobei die Mineralfasern in eine kohlenstoffhaltige Matrix eingebettet werden, sowie nach diesem Verfahren hergestellte, Mineralfasern enthaltende, kohlenstoffgebundene Formteile.

Es sind bereits Mineralfasern enthaltende, kohlenstoffgebundene Formteile bekannt. So ist in der DE 30 09 182 C2 ein Formkörper aus einem wärmedämmenden Material und ein Verfahren zu dessen Herstellung beschrieben. Gemäß diesem Herstellungsverfahren werden mit Mineralfasern, welche 15 bis 60 Gew.-% des Materials des Formkörpers bilden, kohlenstoffhaltige Stoffe vermischt, z.B. feste Harze eingemischt oder die Fasern in flüssige kohlenstoffhaltige Stoffe eingetaucht. Als kohlenstoffhaltige Stoffe können Kunstharze, Erdölpech oder Teer verwendet werden. Nach der Formgebung erfolgt dann die Pyrolyse bzw. Krackung der kohlenstoffhaltigen Stoffe. Weiterhin ist aus der DE-AS 19 47 904 ein feuerfestes, wärmeisolierendes Material aus Aluminiumsilikatfasern und einem Bindemittel bekannt, welches teilchenförmige, feuerfeste Füllstoffe enthält. Ein weiteres, keramische Fasern enthaltendes Plattenmaterial und ein Verfahren zu seiner Herstellung ist aus der EP 00 77 444 A1 bekannt, wobei die Herstellung dieses Plattenmaterials ebenfalls aus einer wässrigen Aufschlämmung der Fasern, die anorganische feuerfeste Füllstoffe enthält, mittels eines Aufflockmittels oder Ausflockmittels in Form eines kationischen Polyacrylamids erfolgt. Aus der DE 34 36 781 ist ein Verfahren zur Herstellung von Formleichtkörpern aus keramischen Fasern, feinzerteilten Feuerfeststoffen, anorganischen Bindemitteln und üblichen Zusätzen bekannt, wobei hier ebenfalls ein zweistufiger Ausflockvorgang und ein Vermischen der beiden ausgeflockten Dispersionen erfolgt. Gemäß diesem Stand der Technik unter Verwendung einer Dispersion der Fasern zur Formgebung - mit oder ohne Ausflockung - werden jedoch keine Formkörper hergestellt, welche eine Kohlenstoffbindung aufweisen.

Aufgabe der vorliegenden Erfindung ist die Bereitstellung eines Verfahrens zur Herstellung von feuerfeste oder feuerbeständige Mineralfasern enthaltenden Formteilen, die eine Kohlenstoffbindung und kohlenstoffhaltige Phase aufweisen, wobei das Verfahren in einfacher Weise durchgeführt werden kann und die Herstellung von solchen Formteilen ermöglicht, deren Rohdichte in breiten Bereichen eingestellt werden kann, bei denen jedoch insbesondere eine geringe Rohdichte erzielt werden kann.

Zur Lösung dieser Aufgabe dient das erfindungsgemäße Verfahren, das dadurch gekennzeichnet ist, daß auf in wässriger Aufschlammung vorliegende Mineralfasern feinteiliges Pech, Teer oder Resol- oder Novolakharze aus der wässrigen Aufschlämmung aufgeflockt werden, aus der Aufschlämmung das Formteil hergestellt wird, das grüne Formteil getrocknet und bei Temperaturen von 350°C bis 1300°C pyrolisiert wird.

Gemäß einer bevorzugten Ausführungsform werden auf die Mineralfasern in der Aufschlämmung noch feinteilige, feuerfeste oder feuerbeständige Stoffe und/oder anorganische Bindemittel und/oder hydraulisch abbindende Feuerfestzemente aufgeflockt. Hierdurch ist es möglich, die Eigenschaften der erhaltenen Feuerfestformteile je nach Bedarf einzustellen und auch deren Rohdichte zu steuern. Weiterhin ist bei Verwendung von anorganischen Bindemitteln der Vorteil gegeben, daß eine relativ hohe Festigkeit in einem Zwischentemperaturbereich von 400 bis 800°C erreicht wird und bei Verwendung von hydraulisch abbindenden Feuerfestzementen ist der Vorteil gegeben, daß nach dem Trocknen bereits eine hohe Grünfestigkeit des Formkörpers erreicht wird.

Gemäß einer weiteren bevorzugten Ausführungsform wird als Aufflockmittel eine kationische Stärke verwendet.

Bei dem erfindungsgemäßen Verfahren werden die Mineralfasern in einer Menge von 5 bis 90 Gew.-%, das Pech, der Teer oder das Resol- oder Novolakharz in einer Menge von 10 bis 30, vorzugsweise 15 bis 25 Gew.-%, die feinteiligen feuerfesten oder feuerbeständigen Stoffe in einer Menge von 5 bis 70 Gew.-%, die anorganischen Bindemittel in einer Menge von 5 bis 25 Gew.-% und die hydraulisch abbindenden Feuerfestzemente in einer Menge von 5 bis 20 Gew.-% eingesetzt, wobei sich diese Angaben auf das getrocknete, noch nicht pyrolisierte Formteil beziehen.

Die bei dem erfindungsgemäßen Verfahren verwendeten, feuerfesten oder feuerbeständigen Mineralfasern können beliebige Mineralfasern sein, vorzugsweise handelt es sich um Fasern aus Siliziumdioxid, aus Aluminiumoxid, deren Gehalt an $Al_2O_3$ vorzugsweise wenigstens 72 % betragt, oder aus einem Aluminiumsilikatmaterial, insbesondere mit 40 bis 60 % $Al_2O_3$ und 60 bis 40 % $SiO_2$.

Der Durchmesser dieser Mineralfasern ist vorzugsweise kleiner als 15 μm, also so klein, daß ein Brechen der Fasern bei deren Verarbeitung nicht zu befürchten ist. Aufgrund der Bedingungen, unter denen solche Fasern hergestellt werden, ist ihr Durchmesser gewöhnlich größer als 1 μm.

Die Länge dieser Fasern soll mehr als 3 mm betragen, damit die Fasern ihre Rolle als mechanische Verstärkung im Inneren des Formkörpers erfüllen können. Es gibt keinen kritischen Maximalwert für die Länge der Fasern, abgesehen von der kritischen Länge, die durch die Art der Faserherstellung gegeben ist.

Bei dem erfindungsgemäßen Verfahren wird ein feinteiliges Pech, Teer oder Resol- oder Novolakharz verwendet. Hierbei handelt es sich um handelsübliche bekannte Stoffe. Die maximale Korngröße dieser feinteiligen kohlenstoffhaltigen Stoffe liegt vorzugsweise bei 0,09 mm. Die feinteiligen kohlenstoffhaltigen Stoffe führen beim Trocknen bei Temperaturen oberhalb 80°C zur Entwicklung der Festigkeit der Formteile. Die feinteiligen kohlenstoffhaltigen Stoffe bilden ferner eine kohlenstoffhaltige Phase, d.h. es bilden sich Anlagerungen und Beschichtungen an den Mineralfasern und bei hohen Anteilen der kohlenstoffhaltigen Stoffe wird eine kontinuierliche kohlenstoffhaltige Matrix erreicht. Die kohlenstoffhaltige Phase führt nach der Pyrolyse durch die Hitzebehandlung des Formteils zur Verbesserung der Abriebfestigkeit und Widerstandsfähigkeit gegenüber Korrosion.

Bei dem Verfahren werden Aufflockmittel verwendet. Hierbei handelt es sich um anionische oder kationische Stoffe, wobei kationische Stärken bevorzugt sind. Es können jedoch auch die in der EP 00 77 444 verwendeten kationischen Polyacrylamidflockungsmittel eingesetzt werden, ebenso andere an sich bekannte kationische Flockungsmittel in Form von Polyelektrolyten, z.B. Methacrylsäureester. Diese kationischen Flockungsmittel werden üblicherweise in Form einer Lösung mit einer Konzentration von 0,5 bis 1 Gew.-% angemacht und vor dem Gebrauch auf 0,05 bis 0,1 Gew.-%ige Lösungen weiter verdünnt; ebenso anionische Mittel, wie anionische Polyelektrolyte auf Acrylamidbasis.

Gemäß einer weiteren bevorzugten Ausführungsform werden zusammen mit dem Pech, Teer oder Resol- oder Novolakharz auf die Mineralfasern in der wässrigen Aufschlämmung feinteilige, feuerfeste oder feuerbeständige Stoffe aufgeflockt. Solche feinteiligen bzw. feinzerteilten Feuerfeststoffe mit einer Korngröße ≤ 0,09 mm können übliche Feuerfeststoffe sein, z.B. Schamotte, Bauxit, Tonerde, Korund, Zirkoniumdioxid, Zirkoniumsilikat, Magnesiumoxid, Cordierit, Kohlenstoff bzw. Graphit, Koks, Siliziumcarbid und/oder Chromoxid. Solche feinteiligen Feuerfeststoffe können alleine oder im Gemisch verwendet werden.

Weiterhin kann bei dem erfindungsgemäßen Verfahren noch ein anorganisches Bindemittel zusammen mit dem Pech, Teer oder Resol- oder Novolakharz aufgeflockt werden. Bei solchen anorganischen Bindemitteln kann es sich um kolloidales $SiO_2$ oder kolloidales $Al_2O_3$ handeln. Durch diese anorganischen Bindemittel wird die Festigkeit der Formteile weiter verbessert.

Ebenso können auch hydraulisch abbindende Feuerfestzemente, z.B. Tonerdeschmelzzement oder Tonerdezemente mit hohem $Al_2O_3$-Gehalt zusammen mit dem Pech, Teer oder Resol- oder Novolakharz aufgeflockt werden. Durch die Erhärtung des Feuerfestzements erhält das Formteil seine Festigkeit. Die feinteiligen Feuerfeststoffe, anorganischen Bindemittel und hydraulisch abbindenden Feuerfestzemente können jeweils für sich alleine oder in beliebigen Mischungen bzw. Kombinationen verwendet werden.

Beim erfindungsgemäßen Verfahren werden in der Aufschlämmung vorzugsweise Mineralfasern in einer Menge von 5 bis 15 Gew.-% oder 60 bis 70 Gew.-% eingesetzt. Formteile mit dem niedrigen Anteil an Mineralfasern zeichnen sich durch ein relativ niedriges Raumgewicht und eine geringe Wärmeleitfähigkeit bei im übrigen guter Festigkeit und Widerstandsfähigkeit gegenüber Verschleiß aus. Mit höherem Anteil an Mineralfasern tritt zunächst nur eine geringe Abnahme des Raumgewichts ein und zugleich nimmt die Festigkeit stark ab, so daß derartige Zusammensetzungen der Aufschlämmung nicht als besonders vorteilhaft anzusehen sind. Erst bei überwiegendem Anteil an Mineralfasern ab etwa 60 Gew.-% werden in vorteilhafter Weise Formteile mit sehr geringer Wärmeleitfähigkeit, niedrigem Raumgewicht und relativ hoher Festigkeit erhalten.

Um bei den Formteilen die kohlenstoffhaltige Phase vor dem Angriff durch Oxidation zu - schützen, kann bei der Herstellung der Formteile in der Aufschlämmung als Antioxidationsmittel elementares Silizium oder metallisches Aluminium als Pulver mit einer Korngröße von unter 0,09 mm eingesetzt werden. Während der Pyrolyse der Formteile durch Hitzebehandlung reagiert teilweise das Antioxidationsmittel mit dem Kohlenstoff zu Carbiden.

Bei dem erfindungsgemäßen Verfahren wird zunächst eine wässrige Aufschlämmung der Mineralfasern hergestellt. Eine solche Aufschlämmung besitzt im allgemeinen eine Konsistenz von 0,5 bis 3 Gew.-%. Nach Herstellung dieser wässrigen Aufschlämmung der Mineralfasern wird in diese Aufschlämmung das feinteilige Pech, Teer oder Resol- oder Novolakharz eingestreut und hiermit gut vermischt. Ebenso werden gegebenenfalls die feinteiligen Feuerfeststoffe, anorganischen Bindemittel und hydraulisch abbindenden Feuerfestzemente in dieser Stufe zugegeben. Anschließend wird die zuvor beschriebene Lösung des Aufflockmittels zugesetzt, wobei hier üblicherweise eine Menge von 5 g des Aufflockmittels, berechnet als Feststoff, pro 100 kg der Aufschlämmung verwendet werden.

Anschließend wird aus der Dispersion, welche die geflockte Aufschlämmung enthält, in üblicher Weise der Formkörper geformt. Die Dispersion wird in eine Form gefüllt, die mit einem Siebboden ausgestattet ist. Durch Ablaufen der Flüssigkeit durch den Siebboden, wobei der Vorgang noch durch Anlegen von Vakuum unterstützt werden kann, und durch eventuell zusätzlichen Preßdruck wird die Dispersion entwässert und der Formkörper gebildet.

Die Formkörper werden üblicherweise bei Temperaturen von 110 bis 180°C getrocknet. Nach dem Trocknen werden die Formteile bei Temperaturen zwischen 350°C bis zu Temperaturen von 1300°C behandelt. Es erfolgt eine teilweise oder vollständige Pyrolyse bzw. Verkokung des Pechs, Teers oder Resol- oder Novolakharzes, wodurch die Bildung oder Verstärkung der Kohlenstoffbindung der Mineralfasern und die weitere Ausbildung der kohlenstoffhaltigen Phase erfolgt. Die Mineralfasern können bei hohen Anteilen der kohlenstoffhaltigen Phase in ihr, wie in einer kohlenstoffhaltigen Matrix, eingebettet sein. Die jeweilige Temperatur der Hitzebehandlung hängt von dem verwendeten feinteiligen Pech, Teer oder Resol- oder Novolakharz ab, ferner davon, ob ein bereits zu 100 % pyrolisiertes Formteil erforderlich ist, oder ob eine Restpyrolyse erst bei der Anwendung beim Benutzer des Formteils möglich oder gewünscht ist.

Die Hitzebehandlung zur Pyrolyse bzw. Verkokung des Pechs, Teers, Resol- oder Novolakharzes erfolgt in an sich bekannter Weise in nichtoxidierender Atmosphäre, d.h. unter einem Inertgas wie Stickstoff, Kohlenmonoxid oder Kohlendioxid.

Die Erfindung wird anhand der folgenden Beispiele näher erläutert.

Beispiel 1

Es wurden 63 Gew.-Teile Mineralfasern mit einem $Al_2O_3$-Gehalt von 47 Gew.-%, Rest $SiO_2$, in eine 1 %ige Aufschlämmung mit Wasser unter Zuhilfenahme eines kräftigen Rührwerks überführt. Hierzu wurden noch 7,5 Gew.-Teile kolloidale Kieselerde, 23 Gew.-Teile eines feinteiligen, festen Novolakharzes mit einer durchschnittlichen Korngröße von 2 bis 3 μm und 6,5 Gew.-Teile feinteilige Tonerde ($Al_2O_3$) mit einer Korngröße ≤ 10 μm zugesetzt und ebenfalls in der Aufschlämmung gut verrührt. Anschließend wurden eine 0,5 Gew.-%ige Lösung einer kationischen Stärke zugesetzt, was die Aufflockung des Novolakharzes und der feinteiligen Feuerfeststoffe sowie des anorganischen Bindemittels bewirkt. Die Lösung wurde auf einer Siebform unter Anlegen eines Vakuums zu Platten entwässert, anschließend wurden diese Platten bei 120 bis 150°C getrocknet. Die Platten wurden dann in einer nichtoxidierenden Atmosphäre bei 1200°C hitzebehandelt, wodurch die Verkokung des Novolakharzes erfolgte.

Die Rohdichte der so hergestellten Platten betrug 0,41 g/cm³. Ihre Kaltbiegefestigkeit lag bei 2,2 N/mm².

Beispiel 2

Die Arbeitsweise von Beispiel 1 wurde wiederholt, wobei 70 Gew.-Teile der in Beispiel 1 verwendeten Mineralfasern, 24 Gew.-Teile Resolharz und 6,0 Gew.-Teile der in Beispiel 1 verwendeten Tonerde eingesetzt wurden. Das Ausflocken erfolgte wieder mittels einer kationischen Stärke, wobei diese, berechnet auf Feststoffgehalt, in einer Menge von 0,125 Gew.-Teilen zugesetzt wurde.

Die Weiterverarbeitung erfolgte entsprechend der Arbeitsweise von Beispiel 1, wobei Platten mit einer Rohdichte von etwa 0,4 g/cm³, erhalten wurden.

Beispiel 3

85 Gew.-Teile der in Beispiel 1 verwendeten Mineralfasern und 15 Gew.-Teile des in Beispiel 1 verwendeten Novolakharzes wurden zu einer 0,5 Gew.-%igen Aufschlämmung in Wasser (Konsistenz = 0,5 %) angesetzt. Es erfolgte wieder die Ausfällung des Novolakharzes auf den keramischen Fasern unter Verwendung der in Beispiel 1 eingesetzten kationischen Stärke. Anschließend wurden wiederum Platten hergestellt, welche bei 380°C hitzebehandelt wurden. Hierbei erfolgte eine teilweise Pyrolyse des Novolakharzes.

Die Rohdichte der Platten betrug 0,4 g/cm³.

Beispiel 4

Es wurde eine Aufschlämmung mit 15 Gew.-% Mineralfasern und 30 Gew.-% Novolakharz nach Beispiel 1 angesetzt mit den weiteren Komponenten Quarzmehl unter 0,09 mm mit 33 Gew.-% und kolloidaler Kieselsäure mit 12 Gew.-%. Als Antioxidationsmittel wurde ferner metallisches Aluminiumpulver in der Körnung unter 0,09 mm mit 8 Gew.-% eingesetzt. Die Flockung der Aufschlämmung wurde mit insgesamt 2 Gew.-% Stärke erreicht. Die aus der ausgeflockten Aufschlämmung nach dem Siebform-Verfahren erhaltene Platte erreichte nach Trocknung und Verkokung bei 800°C eine Rohdichte von 0,62 g/cm³ und eine Kaltbiegefestigkeit von 3,2 N/mm².

Beispiel 5

Es wurde eine Aufschlämmung mit den gleichen Komponenten wie in Beispiel 4 durchgeführt, wobei neben 5 Gew.-% Mineralfaser 48 Gew.-% Quarzmehl, 25 Gew.-% Novolakharz, 2 Gew.-% kolloidale Kieselsäure und 5 Gew.-% elementares Aluminiumpulver zusätzlich noch 15 Gew.-% Tonerdezement ($Al_2O_3$-Gehalt 70 Gew.-%) eingesetzt wurden. Nach dem Vakuumsiebverfahren wurde eine Platte mit einer Rohdichte von 0,95 g/cm³, erhalten. Die Kaltbiegefestigkeit betrug nach Verkokung bei 800°C 4,2 N/mm².

Beispiel 6

Es wurde eine weitere Aufschlämmung mit den gleichen Komponenten wie in Beispiel 4 angesetzt, wobei jedoch das Quarzmehl gegen feingemahlene Sintertonerde in der Körnung unter 0,09 mm ausgetauscht wurde. In die Aufschlämmung wurden eingesetzt: 20 Gew.-% Mineralfaser, 45 Gew.-% feine Tonerde, 10 Gew.-% Novolakharz, 15 Gew.-% kolloidale Kieselsäure sowie 8 Gew.-% elementares Silizium. Ferner wurde ein Anteil von 2 Gew.-% Stärke verwendet. Nach der Flockung wurden aus der Dispersion mit Hilfe einer Siebform Platten hergestellt, die anschließend getrocknet und bei 800°C hitzebehandelt wurden.

Die Rohdichte der Platten betrug 0,7 g/cm³.

**Ansprüche**

1. Verfahren zur Herstellung von feuerfeste oder feuerbeständige Mineralfasern enthaltenden Formteilen, wobei die Mineralfasern in eine kohlenstoffhaltige Matrix eingebettet werden, dadurch gekennzeichnet, daß auf in wässriger Aufschlämmung vorliegende Mineralfasern feinteiliges Pech, Teer oder Resol- oder Novolakharze aus der wässrigen Aufschlämmung aufgeflockt werden, aus der Aufschlämmung das Formteil hergestellt wird, das grüne Formteil getrocknet und bei Temperaturen von 350°C bis 1300°C pyrolisiert wird.

2. Verfahren nach Anspruch 1, dadurch gekennzeichnet, daß auf die Mineralfasern in der Aufschlämmung weiterhin noch feinteilige, feuerfeste oder feuerbeständige Stoffe und/oder anorganische Bindemittel und/oder hydraulisch abbindende Feuerfestzemente aufgeflockt werden.

3. Verfahren nach Anspruch 1 oder 2, dadurch gekennzeichnet, daß als Aufflockmittel eine kationische Stärke verwendet wird.

4. Verfahren nach den vorhergehenden Ansprüchen, dadurch gekennzeichnet, daß in der Aufschlämmung Mineralfasern in einer Menge von 5 bis 90 Gew.-%, das Pech, der Teer oder das Resol- oder Novolakharz in einer Menge von 10 bis 30, vorzugsweise 15 bis 25 Gew.-%, die feinteiligen feuerfesten oder feuerbeständigen Stoffe in einer Menge von 5 bis 70 Gew.-%, die anorganischen Bindemittel in einer Menge von 5 bis 25 Gew.-% und die hydraulisch abbindenden Feuerfestzemente in einer Menge von 5 bis 20 Gew.-% eingesetzt werden, wobei die Mengen auf das getrocknete, noch nicht pyrolisierte Formteil bezogen sind.

5. Verfahren nach Anspruch 4, dadurch gekennzeichnet, daß in der Aufschlämmung Mineralfasern in einer Menge von 5 bis 15 Gew.-% oder 60 bis 70 Gew.-% eingesetzt werden, wobei die Menge auf das getrocknete, noch nicht pyrolisierte Formteil bezogen ist.

6. Mineralfasern enthaltendes, kohlenstoffgebundenes Formteil, hergestellt nach dem Verfahren nach einem der Ansprüche 1 bis 5.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | EP-A-0 077 444 (KENNECOTT CORP.) <br> * Ansprüche 1,3,4,6-11,13-19; Seite 3, Zeile 28 - Seite 5, Zeile 28; Seite 6, Zeile 19 - Seite 7, Zeile 7 * <br> --- | 1-6 | C 04 B 35/82 <br> C 04 B 30/02 <br> C 04 B 28/02 // <br> (C 04 B 30/02 <br> C 04 B 14:46 ) <br> (C 04 B 28/02 <br> C 04 B 14:46 ) |
| A,D | GB-A-2 053 873 (SOCIETE EUROPEENE DE PROPULSION) <br> * Ansprüche 1-5,9,10,13; Seite 2, Zeile 115 - Seite 3, Zeile 17 * <br> --- | 1-6 | |
| A | GB-A-1 204 472 (FOSECO TRADING AG) <br> * Ansprüche 1-5,9-11; Seite 3, Zeile 105 - Seite 4, Zeile 28 * <br> --- | 1-6 | |
| A | US-A-4 152 482 (C.D. REYNOLDS et al.) <br> * Ansprüche 1,2; Spalte 4, Zeilen 10-51 * <br> ----- | 1-6 | |

**RECHERCHIERTE SACHGEBIETE (Int. Cl.4)**

C 04 B

Der vorliegende Recherchenbericht wurde für alle Patentansprüche erstellt

| Recherchenort | Abschlußdatum der Recherche | Prüfer |
|---|---|---|
| DEN HAAG | 19-08-1988 | LUETHE H. |